(19) Europäisches Patentamt
European Patent Office
Office européen des brevets

(11) Publication number: 0 064 389 B1

(12) **EUROPEAN PATENT SPECIFICATION**

(45) Date of publication of patent specification: 27.11.85

(51) Int. Cl.$^4$: C 25 B 13/08, C 08 J 5/22

(21) Application number: 82302191.0

(22) Date of filing: 28.04.82

# (54) Composite membrane/electrode, electrochemical cell and electrolysis process.

(30) Priority: 01.05.81 US 259423

(43) Date of publication of application: 10.11.82 Bulletin 82/45

(45) Publication of the grant of the patent: 27.11.85 Bulletin 85/48

(84) Designated Contracting States: AT BE CH DE FR GB IT LI LU NL SE

(56) References cited:
EP-A-0 041 734
DE-A-2 904 647
DE-B-2 560 232
GB-A-1 401 290
US-A-4 151 053

(73) Proprietor: E.I. DU PONT DE NEMOURS AND COMPANY
1007 Market Street
Wilmington Delaware 19898 (US)

(72) Inventor: Copeland, Terry Michael
2416 Donlon Road Chatham
Wilmington Delaware 19803 (US)
Inventor: Li, Stephen
27102 Valley Run Drive
Wilmington Delaware 19810 (US)
Inventor: Johnson, Bruce Bjorge
315 Palmers Lane
Wallingford Pennsylvania 19086 (US)

(74) Representative: Myerscough, Philip Boyd et al
J.A.Kemp & Co. 14, South Square Gray's Inn
London, WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 064 389 B1

## Description

Fluorinated ion exchange polymers having carboxylic acid and/or sulfonic acid functional groups or salts thereof are known in the art. One principal use of such polymers is as a component of a membrane used to separate the anode and cathode compartments of a chloralkali electrolysis cell. Such a membrane can be in the form of a reinforced or unreinforced film or laminar structure. For example, US—A—4 151 053 discloses a laminar structure, or composite membrane, comprising two perfluorocarbon films bonded together, one film having pendant carboxylic acid or salt groups and the other having pendant sulfonic acid or salt groups, in each of which the equivalent weight is from 1000 to 2000, preferably from 1000 to 1500.

A membrane for use in a chloralkali cell desirably provides for operation at low voltage and high current efficiency, and thereby at low power consumption, so as to provide products of high purity at low cost, especially in view of today's steadily increasing cost of energy.

This invention seeks to provide for improved operation of electrochemical cells, more specifically electrolysis cells such as a chloralkali cell, at high current efficiency and low voltage, and thereby at low power consumption, and fuel cells. According to the invention membrane cells can be operated at lower total cell voltages and with commercially useful power consumption with at least one electrode in contact with the ion exchange membrane.

While the description herein is written in terms of a chloralkali process for electrolyzing sodium chloride, it should be understood that the invention is applicable to the electrolysis of alkali metal halides, especially alkali metal chlorides.

According to the invention, there is provided a composite membrane/electrode which consists of a cation exchange membrane which is impermeable to hydraulic flow of liquid and which comprises (a) a first layer of perfluorinated polymer having —$SO_3M$ functional groups, where M is Na or K, and an equivalent weight of up to 1500, said first layer being a surface layer of said membrane, (b) a second layer of perfluorinated polymer having —COOM functional groups, where M is Na or K, and an equivalent weight of up to 1400, and (c) optionally, one or more additional layers, being the same or different, of perfluorinated polymer having —$SO_3M$ and/or —COOM functional groups and an equivalent weight of up to 1600, all adjacent layers of said membrane being in adherent contact with one another, and (2) an electrocatalyst bonded to at least one exposed surface of said membrane with a fluoropolymer binder having —COOM and/or —$SO_3M$ functional groups, where M is Na or K, such that said electrocatalyst is in the form of at least one gas- and electrolyte-permeable stratum.

The term "electrocatalyst" is used herein to refer to a substance which catalyzes or otherwise promotes the chemical action occurring in one of the compartments of an electrochemical cell, e.g. by reducing overvoltage.

In another aspect of the invention there is provided an electrochemical cell in which such a composite membrane/electrode is incorporated.

In yet another aspect of the invention there is provided an electrolysis process which is carried out in such an electrochemical cell.

In a further aspect of the invention there is provided a process for making the composite membrane/electrode of the invention.

The membranes with which the present invention is concerned are typically prepared from two or more layers of fluorinated polymer which each have —COOR and/or —$SO_2W$ functional groups, where R is $C_1$—$C_4$ alkyl and W is F or Cl, and optionally a web of support material.

The carboxylic polymer with which the present invention is concerned is typically a carboxylic polymer having a fluorinated hydrocarbon backbone chain to which are attached the functional groups or pendant side chains which in turn carry the functional groups. The pendant side chains can contain, for example

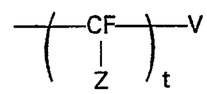

groups wherein Z is F or $CF_3$, t is 1 to 12, and V is —COOR or —CN, where R is $C_1$—$C_4$ alkyl. Ordinarily, the functional group in the side chains of the polymer will be present in terminal

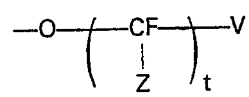

groups. Examples of fluorinated polymers of this kind are disclosed in British Patent No. 1,145,445, U.S. 4,116,888 and U.S. 3,506,635. More specifically, the polymers can be prepared from monomers which are fluorinated or fluorine-substituted vinyl compounds. The polymers are usually made from at least two monomers. At least one monomer is a fluorinated vinyl compound such as vinyl fluoride, hexafluoropropylene, vinylidene fluoride, trifluoroethylene, chlorotrifluoroethylene, perfluoro (alkyl vinyl ether), tetrafluoroethylene and mixtures thereof. In the case of copolymers which will be used in electrolysis of brine, the precursor vinyl monomer desirably will not contain hydrogen. Additionally, at least one monomer is a fluorinated monomer which contains a group which can be hydrolyzed to a carboxylic acid group, e.g., a carboalkoxy or nitrile group, in a side chain as set forth above.

By "fluorinated polymer" is meant a polymer in which, after loss of the R group by hydrolysis to ion exchange form, the number of F atoms is at least 90% of the number of F atoms and H atoms.

The monomers, with the exception of the R group in the —COOR, will preferably not contain hydrogen, especially if the polymer will be used in the electrolysis of brine, and for greatest stability

in harsh environments, most preferably will be free of both hydrogen and chlorine, i.e., will be perfluorinated; the R group need not be fluorinated as it is lost during hydrolysis when the functional groups are converted to ion exchange groups.

One exemplary suitable type of carboxyl-containing monomer is represented by the formula

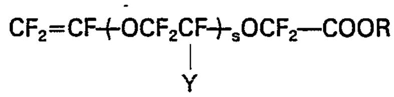

wherein
R is lower alkyl,
Y is F or $CF_3$, and
s is 0, 1 or 2.

Those monomers wherein s is 1 are preferred because their preparation and isolation in good yield is more easily accomplished than when s is 0 or 2. The compound

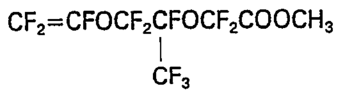

is an especially useful monomer. Such monomers can be prepared, for example, from compounds having the formula

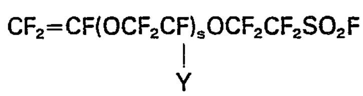

wherein s and Y are as defined above, by (1) saturating the terminal vinyl group with chlorine to protect it in subsequent steps by converting it to a $CF_2Cl—CFCl—$ group; (2) oxidation with nitrogen dioxide to convert the $—OCF_2CF_2SO_2F$ group to an $—OCF_2COF$ group; (3) esterification with an alcohol such as methanol to form an $—OCF_2COOCH_3$ group; and (4) dechlorination with zinc dust to regenerate the terminal $CF_2=CF—$ group. It is also possible to replace steps (2) and (3) of this sequence by the steps (a) reduction of the $—OCF_2CF_2SO_2F$ group to a sulfinic acid, $—OCF_2CF_2SO_2H$, or alkali metal or alkaline earth metal salt thereof by treatment with a sulfite salt or hydrazine; (b) oxidation of the sulfinic acid or salt thereof with oxygen or chromic acid, whereby $—OCF_2COOH$ groups or metal salts thereof are formed; and (c) esterification to $—OCF_2COOCH_3$ by known methods; this sequence is more fully described in South African Patent No. 78/2224. Preparation of copolymers thereof is described in South African Patent No. 78/2221.

Another exemplary suitable type of carboxyl-containing monomer is represented by the formula

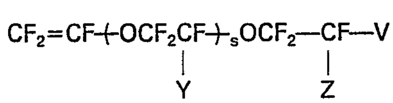

wherein
V is —COOR or —CN,
R is lower alkyl,
Y is F or $CF_3$,
Z is F or $CF_3$, and
s is 0, 1 or 2.

The most preferred monomers are those wherein V is —COOR wherein R is lower alkyl, generally $C_1$ to $C_5$, because of ease in polymerization and conversion to ionic form. Those monomers wherein s is 1 are also preferred because their preparation and isolation in good yield is more easily accomplished than when s is 0 or 2. Preparation of those monomers wherein V is —COOR where R is lower alkyl, and copolymers thereof, is described in U.S. Patent No. 4,131,740. The compounds

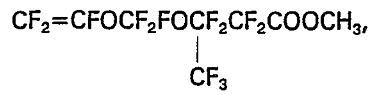 and

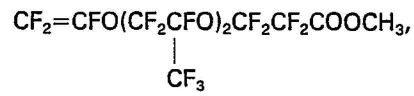

whose preparation is described therein, are especially useful monomers. Preparation of monomers wherein V is —CN is described in U.S. Patent No. 3,852,326.

Yet another suitable type of carboxyl-containing monomer is that having a terminal $—O(CF_2)_vCOOCH_3$ group where v is from 2 to 12, such as

$$CF_2=CF—O(CF_2)_3COOCH_3$$

and

$$CF_2=CFOCF_2CF(CF_3)O(CF_2)_3COOCH_3.$$

Preparation of such monomers and copolymers thereof is described in Japanese Patent Publications 38486/77 and 28586/77, and in British Patent No. 1,145,445.

Another class of carboxyl-containing polymers is represented by polymers having the repeating units

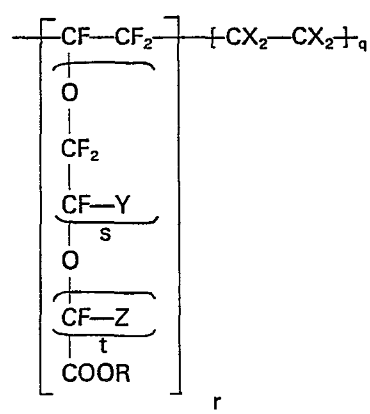

wherein
q is 3 to 15,
r is 1 to 10,
s is 0, 1 or 2,
t is 1 to 12,

the X's taken together are four fluorines or three fluorines and one chlorine,

Y is F or $CF_3$,

Z is F or $CF_3$, and

R is lower alkyl.

A preferred group of copolymers are those of tetrafluoroethylene and a compound having the formula

$$CF_2{=}CFO(CF_2\underset{\underset{Y}{|}}{C}FO)_n(CF_2)_mCOOR,$$

where

n is 0, 1 or 2,

m is 1, 2, 3 or 4,

Y is F or $CF_3$, and

R is $CH_3$, $C_2H_5$ or $C_3H_7$.

Such copolymers with which the present invention is concerned can be prepared by techniques known in the art, e.g., U.S. Patent No. 3,528,954, U.S. Patent No. 4,131,740, and South African Patent No. 78/2225.

The sulfonyl polymer with which the present invention is concerned is typically a polymer having a fluorinated hydrocarbon backbone chain to which are attached the functional groups or pendant side chains which in turn carry the functional groups. The pendant side chains can contain, for example,

$$-CF_2-\underset{\underset{R_f}{|}}{C}F-SO_2W$$

groups wherein $R_f$ is F, Cl, or a $C_1$ to $C_{10}$ perfluoroalkyl radical, and W is F or Cl, preferably F. Ordinarily, the functional group in the side chains of the polymer will be present in terminal

$$-O-CF_2-\underset{\underset{R_f}{|}}{C}FSO_2F$$

groups. Examples of fluorinated polymers of this kind are disclosed in U.S. Patent No. 3,282,875, U.S. Patent No. 3,560,568 and U.S. Patent No. 3,718,627. More specifically, the polymers can be prepared from monomers which are fluorinated or fluorine substituted vinyl compounds. The polymers are made from at least two monomers, with at least one of the monomers coming from each of the two groups described below.

At least one monomer is a fluorinated vinyl compound such as vinyl fluoride, hexafluoropropylene, vinylidene fluoride, trifluoroethylene, chlorotrifluoroethylene, perfluoro (alkyl vinyl ether), tetrafluoroethylene and mixtures thereof. In the case of copolymers which will be used in electrolysis of brine, the precursor vinyl monomer desirably will not contain hydrogen.

The second group is the sulfonyl-containing monomers containing the precursor group

$$-CF_2-\underset{\underset{R_f}{|}}{C}F-SO_2F,$$

wherein $R_f$ is as defined above. Additional examples can be represented by the general formula

$$CF_2{=}CF-T_k-CF_2SO_2F$$

wherein T is a bifunctional fluorinated radical comprising 1 to 8 carbon atoms, and k is 0 or 1. Substituent atoms in T include fluorine, chlorine, or hydrogen, although generally hydrogen will be excluded in use of the copolymer for ion exchange in a chloralkali cell. The most preferred polymers are free of both hydrogen and chlorine attached to carbon, i.e., they are perfluorinated, for greatest stability in harsh environments. The T radical of the formula above can be either branched or unbranched, i.e., straight-chain, and can have one or more ether linkages. It is preferred that the vinyl radical in this group of sulfonyl fluoride containing comonomers be joined to the T group through an ether linkage, i.e., that the comonomer be of the formula

$$CF_2{=}CF-O-T-CF_2-SO_2F.$$

Illustrative of such sulfonyl fluoride containing comonomers are

$$CF_2{=}CFOCF_2CF_2SO_2F,$$

$$CF_2{=}CFOCF_2\underset{\underset{CF_3}{|}}{C}FOCF_2CF_2SO_2F,$$

$$CF_2{=}CFOCF_2\underset{\underset{CF_3}{|}}{C}FOCF_2\underset{\underset{CF_3}{|}}{C}FOCF_2CF_2SO_2F,$$

$$CF_2{=}CFCF_2CF_2SO_2F,$$

and

$$CF_2{=}CFOCF_2\underset{\underset{\underset{\underset{\underset{\underset{CF_3.}{|}}{O}}{|}}{CF_2}}{|}}{C}FOCF_2CF_2SO_2F$$

The most preferred sulfonyl fluoride containing comonomer is perfluoro-(3,6-dioxa-4-methyl-7-octenesulfonyl fluoride),

$$CF_2{=}CFOCF_2\underset{\underset{CF_3}{|}}{C}FOCF_2CF_2SO_2F.$$

The sulfonyl-containing monomers are disclosed in such references as U.S. Patent No. 3,282,875, U.S. Patent No. 3,041,317, U.S. Patent No. 3,718,627 and U.S. Patent No. 3,560,568.

A preferred class of such polymers is represented by polymers having the repeating units

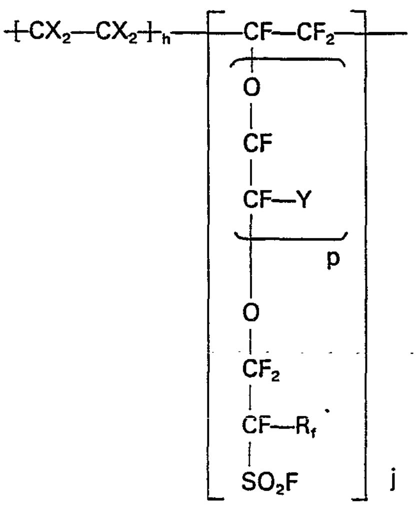

wherein

h is 3 to 15,

j is 1 to 10,

p is 0, 1 or 2,

the X's taken together are four fluorines or three fluorines and one chlorine,

Y is F or $CF_3$, and

$R_f$ is F, Cl, or a $C_1$ to $C_{10}$ perfluoroalkyl radical.

A most preferred copolymer is a copolymer of tetrafluoroethylene and perfluoro(3,6 - dioxa - 4 - methyl - 7 - octenesulfonyl fluoride).

Such copolymers used in the present invention can be prepared by general polymerization techniques developed for homo- and copolymerizations of fluorinated ethylenes, particularly those employed for tetrafluoroethylene which are described in the literature. Nonaqueous techniques for preparing the copolymers include that of U.S. Patent No. 3,041,317, that is, by the polymerization of a mixture of the major monomer therein, such as tetrafluoroethylene, and a fluorinated ethylene containing a sulfonyl fluoride group in the presence of a free radial initiator, preferably a perfluorocarbon peroxide or azo compound, at a temperature in the range 0—200°C and at pressures in the range of $10^5$ to $2\times10^7$ pascals (1—200 Atm.) or higher. The nonaqueous polymerization may, if desired, be carried out in the presence of a fluorinated solvent. Suitable fluorinated solvents are inert, liquid, perfluorinated hydrocarbons, such as perfluoromethylcyclohexane, perfluorodimethylcyclobutane, perfluorooctane, perfluorobenzene and the like, and inert, liquid chlorofluorocarbons such as 1,1,2 - trichloro - 1,2,2 - trifluoroethane, and the like.

Aqueous techniques for preparing the copolymer include contacting the monomers with an aqueous medium containing a free-radial initiator to obtian a slurry of polymer particles in non-water-wet or granular form, as disclosed in U.S. Patent No. 2,393,967, or contacting the monomers with an aqueous medium containing both a free-radical initiator and a telogenically inactive dispersing agent, to obtain an aqueous colloidal dispersion of polymer particles, and coagulating the dispersion, as disclosed, for example, in U.S. Patent No. 2,559,752 and U.S. Patent No. 2,593,583.

A copolymer which contains different types of functional groups can also be used as one of the component films in making the membrane of the invention. For example, a terpolymer prepared from a monomer chosen from the group of nonfunctional monomers described above, a monomer from the group of carboxylic monomers described above, and additionally a monomer from the group of sulfonyl monomers described above, can be prepared and used as one of the film components in making the membrane.

It is further possible to use as one of the component films of the membrane a film which is a blend of two or more polymers. For example, a blend of a polymer having sulfonyl groups in melt-fabricable form with a polymer having carboxyl groups in melt-fabricable form can be prepared and used as one of the component films of the membrane of this invention.

It is additionally possible to use a laminar film as one of the component films in making the membrane. For example, a film having a layer of a copolymer having sulfonyl groups in melt-fabricable form and a layer of a copolymer having carboxyl groups in melt-fabricable form, can also be used as one of the component films in making the membrane of the invention.

When used in a film or membrane to separate the anode and cathode compartments of an electrolysis cell, such as a chloralkali cell, the polymers of the layers (a), (b), (c), after conversion to ionizable form, should have an equivalent weight of no more than the upper limits specified herein. Above these upper limits the electrical resistivity becomes too high. Preferably the equivalent weight should be above the lower limits indicated below, since below the indicated lower limits the mechanical properties are poor because of excessive swelling of the polymer. The relative amounts of the comonomers which make up the polymer should be adjusted or chosen such that each polymer has an equivalent weight no greater than the specified upper limits, for use as an ion exchange barrier in an electrolytic cell. The equivalent weight above which the resistance of a film or membrane becomes too high for practical use in an electrolytic cell varies somewhat with the thickness of the film or membrane. For most purposes and for membranes of ordinary thickness, a value no greater than 1400 is preferred.

An essential component of the membrane with which the invention is concerned is a first layer of a fluorinated polymer which has $-SO_3Na$ or $-SO_3K$ function groups, which has an equivalent weight in the range of 800 to 1500, preferably 950 to 1500, most preferably 1050 to 1200. The thickness of the first layer of first fluorinated polymer is ordinarily 13 to 200 µm, preferably 25 to 150 µm.

Another essential component of the membrane with which the invention is concerned is a second layer of a fluorinated polymer which has —COONa or —COOK functional groups, which has an equivalent weight in the range of 400 to 1400, preferably 800 to 1400, most preferably 1000 to 1150. The thickness of this second layer is ordinarily in the range of 13 to 250 μm (0.5 to 10 mils), preferably 25 to 75 μm (1 to 3 mils), but can be as little as 1 μm. The thickness of the first and second layers taken together should be in the range of 26 to 250 μm (1 to 10 mils), preferably 26 to 200 μm (1 to 6 mils).

Perfluorinated carboxylic polymer which contains the functional groups as part of

$$-OCF_2CF_2COOM$$

moieties is preferred as the polymer of the second layer of the composite membrane/electrode of the invention because of its superior thermal stability in the presence of caustic, especially hot concentrated caustic, and the superior thermal stability of a composite membrane/electrode which includes such polymer, when these are compared to perfluorinated polymer which contains, e.g. $-OCF_2COOM$ functional groups where M is Na or K, and to composite/membrane electrode which includes a layer of that polymer. The less thermally stable polymer with $-OCF_2COOM$ groups more readily decarboxylates to a higher equivalent weight, which leads to the disadvantages of a higher operating voltage, or of lower current density at the same voltage. The polymers with

$$-OCF_2CF_2COOM$$

moieties are advantageous over those with $-O(CF_2)_nCOOM$ moieties where n is 3 or greater because the latter are more difficult and more expensive to synthesize.

As employed herein, the term "membrane" refers to both reinforced and unreinforced structures. Unreinforced structures contain the two required layers of fluorinated ion exchange polymer, and optionally additional layers of fluorinated ion exchange polymer. Reinforced structures are like the unreinforced structures, and additionally contain a woven or knit reinforcing fabric, non-woven paper, porous sheet of a kind now well known in thus art and usually fabricated of a perfluorocarbon polymer, or an electrically conductive metal member, which serves to increase certain physical properties, such as tear strength, of the membrane. In the case of reinforced membranes, the reinforcement may optionally also include sacrificial members such as rayon fibers which degrade an disappear under the conditions which prevail in an operating chloralkali cell.

One preferred membrane for use in the invention is that wherein said second layer contacts said first layer and is at a second surface of said membrane.

Another preferred membrane for use in the invention is that wherein there is a third layer of said perfluorinated polymer, said second layer being between said first and third layers, said third layer being at a second surface of said membrane, the polymer of said third layer having $-SO_3M$ functional groups.

Still another preferred membrane for use in the invention is that wherein there is a third layer of said perfluorinated polymer, said third layer being between said first and second layers, said second layer being at a second surface of said membrane, the polymer of said third layer having $-SO_3M$ functional groups and having an equivalent weight higher than that of the polymer of said first layer. In this case, an especially preferred membrane is that wherein said first layer has an equivalent weight of 1100 to 1500, said third layer has an equivalent weight in the range of 1100 to 1600 and at least 100 higher than that of said first layer, and said second layer has an equivalent weight at least about 200 lower than that of said third layer.

In all cases, adjacent layers of the membrane are in adherent contact with one another.

A composite membrane/electrode which is based on such multilayered membrane as specified in this invention is superior to membrane/electrode based on a simple single-layered membrane. Thus, although membrane/electrode based on a membrane having only a layer of polymer with sulfonic groups operates at low voltage, it has poor current efficiency and cannot be used to make highly concentrated caustic. Although membrane/electrode based on a membrane having only a layer of polymer with carboxylic groups can be used to make concentrated caustic at good current efficiency, it does so only at high voltage at the penalty of higher power cost, or alternatively at low voltage and low current density at the penalty of higher investment and greater floor space to make a given amount of product. The composite membrane/electrode as specified herein provides for operation at both low voltage and high current efficiency while making concentrated caustic.

The membrane can be made from the component layers of film, support material if present, and metal member if present, with the aid of heat and pressure. Temperatures of about 200°C to 300°C are ordinarily required to fuse the polymer films employed. The temperature required may be even above or below this range, however, and will depend on the specific polymer or polymer used. The choice of a suitable temperature in any specific case will be clear, inasmuch as too low a temperature will fail to effect an adequate degree of adherence of films and fabric to each other, and too high a temperature will cause leaks to form. Pressures of as little as about $2\times10^4$ pascals, to pressures exceeding $10^7$ pascals can be used. A hydraulic press is a suitable apparatus for making the membrane, in which case typical pressures are in the range of $2\times10^5$ to $10^7$ pascals.

Another apparatus, suitable for continuous preparation of membrane, comprises a hollow roll with an internal heater and an internal vacuum source. The hollow roll contains a series of circumferential slots on its surface which allow the internal vacuum source to draw component materials in the direction of the hollow roll. The vacuum draws the component materials of the membrane onto the hollow roll, such that typical air pressure against the component materials is in the range of $5\times10^4$ to $10^5$ pascals. A curved stationary plate with a radiant heater faces the top surface of the hollow roll with a spacing of about 6 mm (1/4 inch) between their two surfaces.

During a lamination run, porous release paper is used in contacting the hollow roll as a support material to prevent adherence of any component material to the roll surface and to allow vacuum to pull component materials in the direction of the hollow roll. Feed and takeoff means are provided for the component materials and product. In the feed means one idler roll of smaller diameter than the hollow roll is provided for release paper and component materials. The feed and takeoff means are positioned to allow component materials to pass around the hollow roll over a length of about 5/6 of its circumference. A further idler roll is provided for the release paper allowing its separation from the other materials. Takeoff means are provided for the release paper and the product membrane.

When the membrane includes therein an electrically conductive metal member in the form of wire, screen or porous sheet, said metal member can be included as one of the component elements combined during the lamination process with heat and pressure as just described. In such case, the process is carried out so as to have the metal member either completely embedded in, or embedded in but exposed at, one of the two exterior surfaces of the membrane. It is an easy matter to determine whether the metal member is or is not in fact exposed at the surface by seeing whether electrical contact can be made with the metal member at the surface.

For use in ion exchange-applications and in cells, for example a chloralkali cell for electrolysis of brine, the membrane should have substantially all of the functional groups converted to ionizable functional groups. These groups can be —COOM groups and —$SO_3M$ groups, where M is Na or K. Such conversion is ordinarily and conveniently accomplished by hydrolysis with acid or base, such that the various functional groups described above in relation to the melt-fabricable polymers are converted respectively to the free acids or the alkali metal salts thereof. Such hydrolysis can be carried out with an aqueous solution of a mineral acid or an alkali metal hydroxide. Base hydrolysis is preferred as it is faster and more complete. Use of hot solutions, such as near the boiling point of the solution, is preferred for rapid hydrolysis. The time required for hydrolysis increases with the thickness of the structure. It is also of advantage to include a water-miscible organic compound such as dimethylsulfoxide in the hydrolysis bath. The free carboxylic and sulfonic acids are convertible to salts with NaOH or KOH.

The membrane described herein is impermeable to hydraulic flow of liquid at the typical low pressures which occur during operation of a chloralkali cell. (A diaphragm, which is porous, permits hydraulic flow of liquid therethrough with no change in composition, while an ion exchange membrane permits selective permeation by ions and permeation of liquid by diffusion or electroosmosis, such that the material which penetrates the membrane differs in composition from the liquid in contact with the membrane). It is an easy matter to determine whether there is or is not hydraulic flow of liquid by a leak test with gas or liquid.

The copolymers used in the membrane described herein should be of high enough molecular weight to produce films which are at least moderately strong in both the melt-fabricable precursor form and in the hydrolyzed ion exchange form.

The composite membrane/electrode of the invention consists of a membrane as described above, and electrocatalyst bonded to at least one exposed surface thereof with a fluoropolymer binder which has functional groups in ion exchange form, such that the electrocatalyst is in the form of at least one gas- and electrolyte-permeable stratum.

The electrocatalyst composition may vary depending on which side of the membrane it is bonded to.

The first surface of the membrane will face toward the anode compartment, and the second surface toward the cathode compartment, when employed in chloralkali electrolysis.

Electrocatalysts which are suitable for a stratum A bonded to the surface of the membrane facing the anode compartment, i.e., anodic electrocatalysts, include, but are not limited to, platinum group metals, electroconductive platinum group metal oxides and reduced oxides, and graphite. The platinum group metals include platinum, palladium, iridium, rhodium, ruthenium and osmium. Mixtures thereof can be used. Reduced oxides of a valve metal such as titanium, tantalum, niobium, zirconium, hafnium, vanadium or tungsten can be added. Heating to a temperature below that at which such oxides decompose stabilizes them against oxygen, chlorine, and the harsh electrolysis conditions.

As anodic electrocatalyst preferably comprises reduced oxides of ruthenium or such oxides in combination with at least one reduced oxide from the group consisting of the reduced oxides of iridium, tantalum, titanium, niobium, and hafnium, preferably iridium. More preferably a combination of 75 to 95% by wt., most preferably 75% by wt., of reduced oxides of ruthenium, and 25 to 5% by wt., most preferably 25% by wt., of reduced oxides of iridium is used. It is best to thermally stabilize the reduced oxides of ruthenium by heating, to produce a composition

which is stable against chlorine and oxygen evolution. Such electrocatalyst and its stabilization by heating are described in U.S. Patents 4,224,121 and 3,134,697, and U.K. Patent Application GB 2 009 788 A.

Electrocatalysts which are suitable for a stratum B bonded to the surface of the membrane facing the cathode compartment, i.e., cathodic electrocatalysts, include, but are not limited to, platinum such as platinum black, palladium, electroconductive platinum group metal oxides and reduced oxides; gold; silver; spinels, manganese, cobalt, nickel, iron, and oxides and alloys thereof; Raney nickel; alpha-iron and graphite. A preferred type of cathodic electrocatalyst is one which provides low cathodic overvoltage, e.g., platinum black.

Electrocatalyst is bonded to the surface of the membrane with a fluoropolymer binder which has $-SO_3M$ and/or $-COOM$ functional groups, where M is H, Na or K. Suitable fluoropolymer binders having $-SO_3M$ functional groups include the perfluorinated ion exchange polymers having $-SO_3M$ groups disclosed hereinabove. Suitable fluorocarbon binders having $-COOM$ functional groups include the perfluorinated ion exchange polymers having $-COOM$ groups disclosed hereinabove.

Use of such functionally substituted fluoropolymer binder has significant advantages over use of a nonfunctionally substituted binder. One advantage is the hydrophilic character of the functionally substituted fluoropolymer binder, which wets out more rapidly and absorbs water more readily. Another advantage is the superior adhesion of the electrocatalyst stratum to the membrane, as compared to that when a binder without functional groups, such as polytetrafluoroethylene, is employed.

The electrocatalyst is bonded to the membrane in the form of a stratum which is gas- and electrolyte-permeable. Ordinarily, the electrocatalyst is in the form of particles which are bonded together by the binder.

Various composite membrane/electrode constructions are possible. A composite membrane/electrode can contain only an anodic electrocatalyst stratum A, or only a cathodic electrocatalyst stratum B, or both.

The binder for anodic electrocatalyst stratum A is a fluorocarbon binder which has $-SO_3M$ functional groups. It is preferred that such binder have an equivalent weight no greater than that of the first layer of perfluorinated ion exchange polymer, and more preferred that the equivalent weight of the binder be about equal to that of the first layer.

The binder for cathodic electrocatalyst stratum B can be a fluorocarbon binder which has either $-SO_3M$ or $-COOM$ functional groups. When such binder has $-COOM$ functional groups, it is best that such binder have an equivalent weight no greater than that of the polymer of that layer which is at the second surface of the membrane. When such binder has $-SO_3M$ functional groups, it is best that such binder have an equivalent weight no greater than that of the polymer of the first layer of the membrane.

The composite membrane/electrode of the invention can be made from a membrane as described above by coating onto the surface thereof a dispersion of electrocatalyst in a liquid composition which contains a fluoropolymer binder as described above in a liquid medium, and removing the liquid medium. Ordinarily, the liquid medium is removed by vaporization.

When the binder is a fluoropolymer binder having $-SO_3M$ functional groups and a low equivalent weight, e.g., up to about 1000, the liquid composition can be a solution of the binder in a liquid medium which will form a solution in water containing at least 5% by weight of the liquid medium, e.g., an alcohol such as ethanol or butanol, as described in British Patent 1,286,859.

When the binder is a fluoropolymer binder having $-COOM$ functional groups, the liquid composition can be a solution of the carboxylic fluoropolymer binder with the carboxylic groups in $-COOR$ form, where R is lower alkyl of one to four carbon atoms, in a liquid medium which can be, for example, a perhalogenated liquid, especially a perhalogenated liquid which contains a sulfonyl fluoride or a carboxylic ester group as disclosed in FR—A—2 465 753. After coating onto the membrane substrate and drying, the $-COOR$ groups of the binder can easily be hydrolyzed with a mild caustic solution before the composite membrane/electrode is mounted in a chloralkali cell, or mounted in the cell with the binder still in $-COOR$ form and hydrolyzed by caustic in the cathode compartment of the cell.

When the binder is a fluoropolymer binder having sulfonic groups, it is also possible to make a suspension of electrocatalyst in a liquid composition of the binder, with the sulfonic groups of the binder in $-SO_2F$ form, in a perhalogenated liquid as set forth in the previous paragraph. In such a case, after the coating and drying steps, the $-SO_2F$ groups of the binder can be hydrolyzed by a strong caustic solution before mounting the composite membrane/electrode in the cell.

A substrate membrane either in melt-fabricable unhydrolyzed form or in hydrolyzed sulfonate or carboxylate form can be coated with an electrocatalyst/binder composition wherein the binder polymer is either in the unhydrolyzed sulfonyl fluoride or carboxylic ester form, or in the hydrolyzed sulfonate or carboxylate form. It is preferred, however, for better adhesion of binder to substrate membrane, that hydrolyzed binder be used when the membrane is in hydrolyzed form, and that unhydrolyzed binder be used when the membrane is in unhydrolyzed form.

The term membrane/electrode is employed herein for a composite in which electrocatalyst is bonded to a membrane, inasmuch as said electrocatalyst functions in an electrolysis cell as the electrode in that compartment of the cell which the electrocatalyst stratum faces when a current

collector in that compartment is placed in contact with the electrocatalyst.

The electrochemical cell of the invention comprises anode and cathode compartments, first and second electrically conductive elements, respectively, within said compartments, and, between said compartments, a membrane as described above having a first layer of fluorinated polymer which has $—SO_3M$ groups and which faces toward the anode compartment and a second layer of fluorinated polymer which has —COOM groups, each stratum of electrocatalyst present on the membrane being in contact with the electrically conductive element in that compartment which the stratum faces. When oxygen depolarized cathode technology is employed, the cathode, cathode compartment, or current collector in that compartment, will have a gas inlet for introducing oxygen.

Each of the first and second electrically conductive elements can be either a current collector, or an electrode, i.e., respectively, a cathode and an anode. The current collectors and electrodes can be of any standard material and construction such as wire, mesh, perforated plates, expanded sheet, gas- and liquid-permeable porous metal, etc.

In one cell arrangement, the composite membrane/electrode has only a stratum A of anodic electrocatalyst on the first surface of the membrane. In this case, the first electrically conductive element, which is in the anode compartment, is a foraminous current collector and is in contact with stratum A. The second electrically conductive element, which is in the cathode compartment is a cathode. Preferably, the cathode has a cathodic electrocatalyst as set forth hereinabove on its surface, and, most preferably, will also be in contact with the second surface of the membrane so as to constitute a so-called zero-gap configuration. Such catalytically active cathode should be gas- and liquid- (or electrolyte-) permeable, i.e., either foraminous in those cases when it is desired to provide for easy removal of hydrogen, or microporous or foraminous in those cases when air, oxygen, or any gas mixture which comprises elemental oxygen is introduced so as to employ oxygen depolarized cathode technology by which overall cell voltage is lowered.

In another cell arrangement, the composite membrane/electrode has only a stratum B of cathodic electrocatalyst on the second surface of the membrane. In this case, the second electrically conductive element, which is in the cathode compartment, is a current collector which is in contact with stratum B and which is gas- and liquid- (or electrolyte-) permeable, i.e., either foraminous or microporous as set forth in the previous paragraph in relation to a cathode. The first electrically conductive element, which is in the anode compartment, is an anode. Preferably, the anode has an anodic electrocatalyst as set forth hereinabove on its surface, and, most preferably, will also be in contact with the first surface of the membrane so as to constitute a zero-gap configuration.

In still another cell arrangement, the composite membrane/electrode has both stratum A of anodic electrocatalyst on the first surface of the membrane, and stratum B of cathodic electrocatalyst on the second surface of the membrane. In this case the first electrically conductive element is a foraminous current collector and is in contact with stratum A, and the second electrically conductive element is a current collector which is in contact with stratum B and which is gas- and liquid- (or electrolyte-) permeable, i.e., either foraminous or microporous as set forth in the previous paragraph.

The cell construction is such that a stratum of electrocatalyst of a composite membrane/electrode is contacted by an electrically conductive element, which is a current collector, in the compartment which the stratum faces, and the stratum functions as an electrode, i.e., as either an anode or a cathode, depending on which cell compartment it faces.

In the electrolysis process of the invention, an electrochemical cell of the kind described hereinabove is employed. In this process, an aqueous solution of an alkali metal halide, preferably a chloride, most preferably sodium chloride, is introduced into the anode compartment of the cell, water or an aqueous alkali metal hydroxide solution is introduced into the cathode compartment of the cell, and an electric current is passed through the cell, e.g., by applying an electric potential across the cathode and anode. Chlorine is removed from the anode compartment, along with spent alkali metal halide solution, and aqueous alkali metal hydroxide solution, preferably sodium hydroxide, is removed from the cathode compartment. When an ordinary non-catalytic cathode is used, hydrogen is also removed from the cathode compartment. When an oxygen depolarized cathode is used, hydrogen is not collected as a product. Ordinarily the feed to the cathode compartment is water or a dilute caustic solution.

To further illustrate the innovative aspects of the present invention, the following examples are provided.

In the examples, abbreviations are used as follows:

PTFE refers to polytetrafluoroethylene;

TFE/EVE refers to a copolymer of tetrafluoroethylene and methyl perfluoro (4,7 - dioxa - 5 - methyl - 8 - nonenoate);

TFE/PSEPVE refers to a copolymer of tetrafluoroethylene and perfluoro (3,6 - dioxa - 4 - methyl - 7 - octenesulfonyl fluoride);

EW refers to equivalent weight.

Example 1

A membrane was prepared by thermally bonding together the following layers.

A. A first surface layer consisting of a 102-µm (4

mil) layer of a TFE/PSEPVE copolymer having an equivalent weight of 1100.

B. A second surface layer consisting of a 51-µm (2 mil) layer of TFE/EVE copolymer having an equivalent weight of 1100.

The two layers were pressed together and passed through a thermal laminator with the A layer supported on a web of porous release paper. The temperature of the heated zone was adjusted such that the temperature of the polymer exiting the heated zone was 230—235°C as measured by an infrared measuring instrument.

After lamination, the membrane was hydrolyzed in an aqueous bath containing 30% dimethylsulfoxide and 11% KOH for 20 minutes at 90°C.

To 100 ml of ethanol was added 5 g of a TFE/PSEPVE copolymer having an equivalent weight of 942 which had been hydrolyzed to have the functional groups in $—SO_3Na$ form, and the mixture was refluxed at the boiling point until the polymer had dissolved to form a binder solution.

To 2 ml of the binder solution was added 0.5 g of powdered graphite, and the graphite was dispersed by stirring. The resulting graphite dispersion was applied to the exposed surface of the carboxylic layer of a piece of the above hydrolyzed membrane, spread with the aid of a No. 40 Mayer rod over an area of about 12.5 cm by 12.5 cm (5×5 inches), and allowed to dry at room temperature. A second preparation of 0.5 g of powdered graphite in 2 ml of the binder solution was made, and similarly applied to the exposed surface of the sulfonic layer of the same piece of membrane, and allowed to dry at room temperature. The resulting coated membrane was placed between two pieces of film of 4,4'-diaminodiphenyl ether polypyromellitimide and heated in a press at 160°C at a pressure of $3.5\times10^6$ pascals (500 psi) for 2 minutes. The two polyimide films were stripped from the resulting composite membrane/electrode.

The composite membrane/electrode was soaked in a saturated aqueous sodium chloride solution for two hours, and then mounted in a small chloralkali cell having an active area of 45 $cm^2$, with the sulfonic (first) layer of the membrane toward the anode compartment and the carboxylic (second) layer toward the cathode compartment. The cell was assembled with a DSA (dimensionally stable anode) pressed against a titanium screen which in turn was pressed into intimate contact with the anodic electrocatalyst layer of the composite membrane/electrode, and with a mild steel cathode pressed against a nickel screen which in turn was pressed into intimate contact with the cathodic electrocatalyst layer of the composite membrane/electrode. The cell was operated to electrolyze saturated aqueous sodium chloride solution at 80°C with a current density of 3.1 $KA/m^2$, and produced aqueous sodium hydroxide solution at a concentration of 31.56% at a current efficiency of 95% and voltage of 3.50 volts for 21 days.

Example 2

To 1g of sodium nitrate were added 0.6 g of $RuCl_3$ and 0.2 g of $IrCl_3$, and after mixing, the mixture was fused at 500—600°C for 3 hours. The fused mixture leached with distilled water to remove soluble nitrates and metal halides from an insoluble residue of mixed ruthenium and iridium oxides. The residue of mixed oxides was then further reduced by placing it in water and bubbling hydrogen through the suspension at room temperature for several hours, and this treatment was terminated before reduction to zero valent metal occurred. The resulting reduced, mixed oxides were thoroughly dried, ground, and sieved through a 400-mesh nylon screen. The mixed oxides which passed through the screen were then thermally stabilized by heating at 500—600°C for 1 hour.

To 2 ml of the binder solution of Ex. 1 was added 400 mg of the above thermally stabilized mixed oxides, and the mixture was stirred until the oxides were well dispersed. The resulting dispersion was placed on the exposed surface of the sulfonic (first) layer of another piece of the hydrolyzed membrane of Ex. 1, spread with the aid of a No. 40 Mayer rod to cover an area of about 12.5 by 12.5 cm (5×5 inches), and allowed to dry at room temperature. The resulting coated membrane was placed between two polyimide films and heated in a press at 160°C at a pressure of $3.5\times10^6$ pascals for 2 minutes. The two polyimide films were stripped from the resulting composite membrane/electrode.

The composite membrane/electrode was soaked in sodium chloride solution and mounted in a chloralkali cell as described in Ex. 1. The cell was operated to electrolyze saturated aqueous sodium chloride solution at 80°C with a current density of 3.1 $KA/m^2$ to produce caustic and hydrogen in the cathode compartment, and chlorine in the anode compartment.

Example 3

A binder solution of 0.5 g of TFE/EVE having an equivalent weight of 1050 in 10 g of perfluoro - 1,3 - dimethylcyclohexane was prepared by placing the polymer in the solvent and stirring and heating at the boiling point of the solvent for 4 hours. To 2 ml of the binder solution was added 500 mg of platinum black having a surface area greater than 25 $m^2/g$, and the mixture was stirred until the platinum black was well dispersed. The resulting dispersion was placed on the exposed surface of the carboxylic (second) layer of a piece of the unhydrolyzed membrane of Ex. 1, spread with the aid of a No. 40 Mayer rod to cover an area of about 12.5 by 12.5 cm, and allowed to dry at room temperature. The resulting coated membrane was placed between two polyimide films, and heated in a press at 160°C at a pressure of $3.5\times10^6$ pascals for 2 minutes, the two polyimide polyimide films were then stripped off, and the article was placed in an aqueous 10% by weight sodium hydroxide solution at 95°C for 16 hours to hydrolyze $—SO_2F$ groups in the

membrane to $—SO_3Na$ groups and $—COOCH_3$ groups in the membrane and binder to —COONa groups and thus provide a composite membrane/electrode.

The composite membrane/electrode was soaked in sodium chloride solution and mounted in a chloralkali cell as described in Ex. 1. The cell was operated to electrolyze saturated aqueous sodium chloride solution at 80°C with a current density of 3.1 $KA/m^2$ to produce caustic and hydrogen in the cathode compartment, and chlorine in the anode compartment.

Industrial applicability

The composite membrane/electrode of the present invention is technically advanced over those of the prior art. It exhibits improved performance characteristics when used in a chloroalkali cell, including operation at low voltage and high current efficiency, and thus at low power consumption. There is accordingly a substantial saving in operating costs resulting from the lowered consumption of power.

**Claims**

1. A composite membrane/electrode which consists of (1) a cation exchange membrane which is impermeable to hydraulic flow of liquid and which comprises (a) a first layer of perfluorinated polymer having $—SO_3M$ functional groups, where M is Na or K, and an equivalent weight of up to 1500, said first layer being a surface layer of said membrane, (b) a second layer of perfluorinated polymer having —COOM functional groups, where M is Na or K, and an equivalent weight of up to 1400, and (c) optionally, one or more additional layers, being the same or different, of perfluorinated polymer having $—SO_3M$ and/or —COOM functional groups and an equivalent weight of up to 1600, all adjacent layers of said membrane being in adherent contact with one another, and (2) an electrocatalyst bonded to at least one exposed surface of said membrane with a fluoropolymer binder having —COOM and/or $—SO_3M$ functional groups, where M is Na or K, such that said electrocatalyst is in the form of at least one gas- and electrolyte-permeable stratum.

2. A membrane/electrode according to claim 1 wherein said $—SO_3M$ functional groups of said perfluorinated polymer and of said fluoropolymer binder are present in $—OCF_2CF_2SO_3M$ moieties and said —COOM functional groups of said perfluorinated polymer and of said fluoropolymer binder are present in $—OCF_2CF_2COOM$ moieties.

3. A membrane/electrode according to claim 1 or 2 wherein said second layer contacts said first layer and is at a second surface of said membrane.

4. A membrane/electrode according to claim 1 or 2 wherein there is a third layer of said perfluorinated polymer, said second layer being between said first and third layers, said third layer being at a second surface of said membrane, the polymer of said third layer having $SO_3M$ functional groups.

5. A membrane/electrode according to claim 1 or 2 wherein there is a third layer of said perfluorinated polymer, said third layer being between said first and second layers, said second layer being at a second surface of said membrane, the polymer of said third layer having $—SO_3M$ functional groups and having an equivalent weight higher than that of the polymer of said first layer.

6. A membrane/electrode according to any one of the preceding claims wherein there is a stratum A of anodic electrocatalyst bonded to said first surface with a fluoropolymer binder having $—SO_3M$ functional groups.

7. A membrane/electrode according to any one of the preceding claims wherein there is a stratum B of cathodic electrocatalyst bonded to the second surface of said membrane.

8. A membrane/electrode according to any one of the preceding claims wherein said fluoropolymer binder has an equivalent weight no greater than the equivalent weight of the polymer of the layer or layers to which electrocatalyst is bonded.

9. An electrochemical cell which comprises an anode compartment, a first electrically conductive element within said anode compartment, a cathode compartment, a second electrically conductive element within said cathode compartment, and, between said compartments, a composite membrane/electrode as claimed in any one of the preceding claims, said first surface of said membrane facing toward said anode compartment, said at least one stratum of said electrocatalyst being in contact with the electrically conductive element in that compartment which said at least one stratum faces.

10. An electrochemical cell according to claim 9 wherein there is a foraminous current collector within said anode compartment and a foraminous or microporous cathode within said cathode compartment, said current collector being in contact with a said stratum of anodic electrocatalyst of said membrane/electrode.

11. An electrochemical cell according to claim 10 wherein said cathode has a cathodic electrocatalyst on its surface.

12. An electrochemical cell according to claim 11 wherein said cathode contacts the second surface of said membrane.

13. An electrochemical cell according to claim 9 wherein there is a foraminous anode within said anode compartment and a foraminous or microporous current collector within said cathode compartment, said current collector being in contact with a said stratum of cathodic electrocatalyst of said membrane/electrode.

14. An electrochemical cell according to claim 13 wherein said anode has an anodic electrocatalyst on its surface.

15. An electrochemical cell according to claim

14 wherein said anode contacts the first surface of said membrane.

16. An electrochemical cell according to claim 9 wherein there is a first current collector which is foraminous within said anode compartment and a second current collector which is foraminous or microporous within said cathode compartment, said first current collector being in contact with a said stratum of anodic electrocatalyst, and said second current collector being in contact with a said stratum of cathodic electrocatalyst, of said membrane/electrode.

17. The use in a process for the electrolysis of an alkali metal chloride in an electrochemical cell divided into anode and cathode compartments by a composite membrane/electrode wherein an aqueous alkali metal chloride solution is introduced into the anode compartment of said cell, water or an aqueous alkali metal hydroxide solution is introduced into the cathode compartment of said cell, an electric current is passed through said cell, and aqueous alkali metal hydroxide solution is removed from said cathode compartment and chlorine is removed from said anode compartment, of an electrochemical cell as claimed in any one of claims 9 to 16.

18. The use according to claim 17 wherein a gas comprising elemental oxygen is introduced into said cathode compartment.

19. A process for making a composite membrane/electrode as claimed in any one of claims 1 to 8, which process comprises the steps

(a) providing a cation exchange membrane (1) as defined in claim 1;

(b) applying to at least one exposed surface of said membrane a dispersion of electrocatalyst in a liquid composition which contains the fluoropolymer binder having $—SO_3M$ and/or —COOM functional groups, where M is Na or K, or a precursor thereof having $—SO_2F$ or —COOR groups where R is alkyl of 1 to 4 carbon atoms, the functional groups of the precursor being subsequently hydrolysed to $SO_3M$ or —COOM groups, respectively in a liquid medium; and

(c) removing the liquid medium.

20. A process according to claim 19 wherein said liquid composition contains a fluoropolymer binder having $—SO_3M$ functional groups, where M is Na or K, and an equivalent weight up to 1000, in a liquid medium which will form a solution in water containing at least 5% by weight of the liquid medium.

21. A process according to claim 19 wherein said liquid composition contains a fluoropolymer binder, said fluoropolymer binder having —COOR groups where R is alkyl of 1 to 4 carbon atoms or having $—SO_2F$ groups, in a liquid medium, which is a perhalogenated liquid or a perhalogenated liquid which contains a sulfonyl fluoride or carboxylic ester group, and said process further comprises the step

(d) hydrolyzing the functional groups of said fluoropolymer binder to —COOM or $—SO_3M$ groups.

**Revendications**

1. Ensemble composite membrane/électrode qui est formé (1) d'une membrane échangeuse de cations qui est imperméable à l'écoulement hydraulique de liquide et qui comprend (a) une première couche de polymère perfluoré ayant des groupes fonctionnels $—SO_3M$, où M est Na ou K, et un poids équivalent allant jusqu'à 1500, cette première couche étant une couche superficielle de la membrane, (b) une deuxième couche de polymère perfluoré ayant des groupes fonctionnels —COOM, où M est Na ou K, et un poids équivalent allant jusqu'à 1400, et (c), facultativement, une ou plusieurs couches supplémentaires, semblables ou différentes de polymère perfluoré ayant des groupes fonctionnels $—SO_3M$ et/ou —COOM et un poids équivalent allant jusqu'à 1600, toutes les couches adjacentes de la membrane étant en contact adhérent entre elles, et (2) d'un électrocatalyseur lié à au moins une surface exposée de la membrane par un liant de fluoropolymère ayant des groupes fonctionnel —COOM et/ou $—SO_3M$, où M est Na ou K, de façon que l'électrocatalyseur soit sous la forme d'au moins une strate perméable aux gaz et à l'électrolyte.

2. Ensemble membrane/électrode selon la revendication 1, dans lequel les groupes fonctionnels $—SO_3M$ du polymère perfluoré et du liant de fluoropolymère sont présents dans des fragments $—OCF_2CF_2SO_3M$ et les groupes fontionnels —COOM du polymère perfluoré et du liant de fluoropolymère sont présents dans des fragments $—OCF_2CF_2COOM$.

3. Ensemble membrane/électrode selon la revendication 1 ou 2, dans lequel la deuxième couche est en contact avec la première couche et se trouve à une deuxième surface de la membrane.

4. Ensemble membrane/électrode selon la revendication 1 ou 2, dans lequel il y a une troisième couche du polymère perfluoré, la deuxième couche se trouvant entre les première et troisième couches, la troisième couche se trouvant à une deuxième surface de la membrane, le polymère de la troisième couche ayant des groupes fonctionnels $SO_3M$.

5. Ensemble membrane/électrode selon la revendication 1 ou 2, dans lequel il y a une troisième couche du polymère perfluoré, la troisième couche se trouvant entre les première et deuxième couches, la deuxième couche se trouvant à une deuxième surface de la membrane, la polymère de la troisième couche ayant des groupes fonctionnels $—SO_3M$ et ayant un poids équivalent supérieur à celui du polymère de la première couche.

6. Ensemble membrane/électrode selon l'une quelconque des revendications précédentes, dans lequel il y a une strate A d'électrocatalyseur anodique liée à la première surface par un liant de fluoropolymère ayant des groupes fonctionnels $—SO_3M$.

7. Ensemble membrane/électrode selon l'une

quelconque des revendications précédentes, dans lequel il y a une strate B d'électrocatalyseur cathodique liée à la deuxième surface de la membrane.

8. Ensemble membrane/électrode selon l'une quelconque des revendications précédentes, dans lequel le liant de fluoropolymère a un poids équivalent non supérieur au poids équivalent du polymère de la ou des couche(s) auxquelles l'électrocatalyseur est lié.

9. Cellule électrochimique qui comprend un compartiment d'anode, un premier élément conducteur de l'électricité à l'intérieur du compartiment d'anode, un compartiment de cathode, un deuxième élément conducteur de l'électricité à l'intérieur du compartiment de cathode et, entre ces compartiments, un ensemble composite membrane/électrode selon l'une quelconque des revendications précédentes, la première surface de cette membrane faisant face au compartiment d'anode, la ou les strate(s) d'électrocatalyseur étant en contact avec l'élément conducteur de l'électricité situé dans le compartiment auquel la ou les strate(s) font face.

10. Cellule électrochimique selon la revendication 9, dans laquelle il y a un collecteur de courant perforé à l'intérieur du compartiment d'anode et une cathode perforée ou microporeuse à l'intérieur du compartiment de cathode, le collecteur de courant étant en contact avec une couche d'électrocatalyseur anodique de l'ensemble membrane/électrode.

11. Cellule électrochimique selon la revendication 10, dans laquelle la cathode présente un électrocatalyseur cathodique sur sa surface.

12. Cellule électrochimique selon la revendication 11, dans laquelle la cathode est en contact avec la deuxième surface de la membrane.

13. Cellule électrochimique selon la revendication 9, dans laquelle il y a une anode perforée à l'intérieur du compartiment d'anode et un collecteur de courant perforé ou microporeux à l'intérieur du compartiment de cathode, le collecteur de courant étant en contact avec une strate d'électrocatalyseur cathodique de l'ensemble membrane/électrode.

14. Cellule électrochimique selon la revendication 13, dans laquelle l'anode présente un électrocatalyseur anodique sur sa surface.

15. Cellule électrochimique selon la revendication 14, dans laquelle l'anode est en contact avec la première surface de la membrane.

16. Cellule électrochimique selon la revendication 9, dans laquelle il y a un premier collecteur de courant qui est perforé à l'intérieur du compartiment d'anode et un deuxième collecteur de courant qui est perforé ou microporeux à l'intérieur du compartiment de cathode, le premier collecteur de courant étant en contact avec une strate d'électrocatalyseur anodique, et le deuxième collecteur de courant étant en contact avec une strate d'électrocatalyseur cathodique de l'ensemble membrane/électrode.

17. L'utilisation dans un procédé d'électrolyse d'un chlorure de métal alcalin dans une cellule électrochimique divisée en compartiments d'anode et de cathode par un ensemble composite membrane/électrode, dans lequel on introduit une solution aqueuse de chlorure de métal alcalin dans le compartiment d'anode de la cellule, on introduit de l'eau ou une solution aqueuse d'hydroxyde de métal alcalin dans le compartiment de cathode de la cellule, on retire une solution aqueuse d'hydroxyde de métal alcalin du compartiment de cathode et on retire du chlore du compartiment d'anode, d'une cellule électrochimique selon l'une quelconque des revendications 9 à 16.

18. Utilisation selon la revendication 17, dans laquelle on introduit dans le compartiment de cathode un gaz comprenant de l'oxygène élémentaire.

19. Un procédé de fabrication d'un ensemble composite membrane-électrode selon l'une quelconque des revendications 1 à 8, procédé qui comprend les étapes consistant:

(a) à prévoir une membrane échangeuse de cations (1) telle que définie à la revendication 1;

(b) à appliquer à au moins une surface exposé de la membrane une dispersion d'électrocatalyseur dans une composition liquide qui contient le liant de fluoropolymère ayant des groupes fonctionnels $—SO_3M$ et/ou —COOM, où M est Na ou K, ou un progéniteur de celui-ci ayant des groupes $—SO_2F$ ou —COOR, où R est un groupe alkyle de 1 à 4 atomes de carbone, les groupes fonctionnels du progéniteur étant ensuite hydrolysés en groupes $—SO_3M$ ou —COOM respectivement dans un milieu liquide; et

(c) à éliminer le milieu liquide.

20. Un procédé selon la revendication 19, dans lequel la composition liquide contient un liant de fluoropolymère ayant des groupes fonctionnels $—SO_3M$ où M est Na ou K, et un poids équivalent allant jusqu'à 1000, dans un milieu liquide propre à former dans l'eau une solution contenant au moins 5% en poids du milieu liquide.

21. Un procédé selon la revendication 19, dans lequel la composition liquide contient un liant de fluoropolymère, ce liant de fluoropolymère ayant des groupes —COOR, où R est un groupe alkyle de 1 à 4 atomes de carbone, ou ayant des groupes $—SO_2F$, dans un milieu liquide qui est un liquide perhalogéné ou un liquide perhalogéné qui contient un groupe fluorure de sulfonyle ou ester carboxylique, et le procédé comprend en outre l'étape consistant (d) à hydrolyser les groupes fonctionnels du liant de fluoropolymère en groues —COOM ou $—SO_3M$.

**Patentansprüche**

1. Membran/Elektroden-Verbund, bestehend aus (1) einer Kationenaustauschermembran, die für hydraulische Flüssigkeitsströmung undurchlässig ist, und die umfasst (a) eine erste Schicht aus perfluoriertem Polymerem mit funktionellen

Gruppen $—SO_3M$, worin M Na oder K ist, und einem Äquivalentgewicht von bis zu 1500, wobei die erste Schicht eine Oberflächenschicht der Membran ist, (b) eine zweite Schicht aus perfluoriertem Polymerem mit funktionellen Gruppen —COOM, worin M Na oder K ist, und einem Äquivalentgewicht von bis zu 1400, und (c) gegebenenfalls einer oder mehreren zusätzlichen Schichten, die gleich oder verschieden sind, aus perfluoriertem Polymerem mit funktionellen Gruppen $—SO_3M$ und/oder —COOM, und einem Äquivalentgewicht von bis zu 1600, wobei sämtliche benachbarten Schichten der Membran in Haftkontakt miteinander vorliegen, und (2) einem Elektrokatalysator, gebunden an mindestens eine freie Oberfläche der Membran mit einem Fluorpolymer-Bindemittel mit funktionellen Gruppen —COOM und/oder $—SO_3M$, worin M Na oder K ist, derart, dass der Elektrokatalysator in der Form von mindestens einem gas- und elektrolytdurchlässigen Stratum vorliegt.

2. Membran/Elektrode gemäss Anspruch 1, worin die funktionellen Gruppen $—SO_3M$, des perfluorierten Polymeren und des Fluorpolymer-Bindemittels, in Resten $—OCF_2CF_2SO_3M$ vorliegen und die funktionellen Gruppen —COOM des perfluorierten Polymeren des Fluorpolymer-Bindemittels in Resten $—OCF_2CF_2COOM$ vorliegen.

3. Membran/Elektrode gemäss Anspruch 1 oder 2, worin die zweite Schicht sich in Kontakt mit der ersten Schicht. befindet, und eine zweite Oberfläche der Membran ist.

4. Membran/Elektrode nach Anspruch 1 oder 2, worin eine dritte Schicht des perfluorierten Polymeren vorliegt, die zweite Schicht zwischen der ersten und der dritten Schicht liegt, und die dritte Schicht eine zweite Oberfläche der Membran ist, wobei das Polymere der dritten Schicht funktionelle Gruppen $SO_3M$ hat.

5. Membran/Elektrode nach Anspruch 1 oder 2 in der eine dritte Schicht der perfluorierten Polymeren vorhanden ist, wobei die dritte Schicht zwischen der ersten und der zweiten Schicht liegt, wobie die zweite Schicht eine zweite Oberfläche der Membran ist, und das Polymere der dritten Schicht funktionelle Gruppen $—SO_3M$ hat und ein Äquivalentgewicht grösser als das des Polymeren der ersten Schicht hat.

6. Membran/Elektrode nach einem der vorhergehenden Ansprüche, in der ein Stratum A aus anodischem Elektrokatalysator, gebunden an die erste Oberfläche mit einem Fluorpolymer-Bindemittel mit funktiontionellen Gruppen $—SO_3M$, vorhanden ist.

7. Membran/Elektrode nach einem der vorhergehenden Ansprüche, in der ein Stratum B aus kathodischem Elektrokatalysator, gebunden an die zweite Oberfläche der Membran, vorhanden ist.

8. Membran/Elektrode nach einem der vorhergehenden Ansprüche, in der das Fluorpolymer-Bindemittel ein Äquivalentgewicht von nicht grösser als das Äquivalentgewicht des Polymeren der Schicht oder der Schichten hat, an die der Elektrokatalysator gebunden ist.

9. Elektrochemische Zelle, enthaltend eine Anodenkammer, ein erstes elektrisch leitfähiges Element inner halb der Anodenkammer, eine Kathodenkammer, ein zweites elektrisch leitfähiges Element innerhalb der Kathodenkammer, und zwischen den Kammern einen Membran/Elektroden-Verbund, wie in einem der vorhergehenden Ansprüche beansprucht, wobei die erste Oberfläche der Membran zur Anodenkammer zeigt, und sich das mindestens eine Stratum des Elektrokatalysators in Kontakt mit dem elektrisch leitfähigen Element in der Kammer befindet, zu der das mindestens eine Stratum gerichtet ist.

10. Elektrochemische Zelle nach Anspruch 9, in der eine durchlöcherter Stromsammler in der Anodenkammer und eine durchlöcherte oder mikroporöse Kathode in der Kathodenkammer vorhanden sind, wobei der Stromsammler sich in Kontakt mit dem Stratum aus anodischem Elektrokatalysator der Membran/Elektrode befindet.

11. Elektrochemische Zelle nach Anspruch 10, in der die Kathode einen kathodischen Elektrokatalysator an ihrer Oberfläche hat.

12. Elektrochemische Zelle nach Anspruch 11, in der sich die Kathode in Kontakt mit der zweiten Oberfläche der Membran befindet.

13. Elektrochemische Zelle nach Anspruch 9, in der eine durchlöcherte Anode in der Anodenkammer und ein durchlöcherter oder mikroporöser Stromsammler in der Kathodenkammer vorhanden sind, wobei der Stromsammler sich in Kontakt mit dem Stratum aus kathodischem Elektrokatalysator der Membran/Elektrode befindet.

14. Elektrochemische Zelle nach Anspruch 13, in der die Anode eine anodischen Elektrokatalysator an ihrer Oberfläche hat.

15. Elektrochemische Zelle nach Anspruch 14, in der die Anode sich in Kontakt mit der ersten Oberfläche der Membran befindet.

16. Elektrochemische Zelle nach Anspruch 9, in der ein ersteer Stromsammler, der durchlöchert ist, in der Anodenkammer, und ein zweiter Stromsammler, der durchlöchert oder mikroporös ist, in der Kathodenkammer vorhanden sind, wobei der erste Stromsammler sich in Kontakt mit dem Stratum des anodischen Elektrokatalysators befindet, und sich der zweite Stromsammler in Kontakt mit dem Stratum des kathodischen Elektrokatalysators der Membran/Elektrode befindet.

17. Verwendung in einem Verfahren zur Elektrolyse eines Alkalichlorids in einer elektrochemischen Zelle, die in Anoden- und Kathodenkammern durch einen Membran/Elektroden-Verbund aufgeteilt ist, wobei eine wässerige Alkalichloridlösung in die Anodenkammer der Zelle eingeführt wird, Wasser oder eine wässerige Alkalihydroxidlösung in die Kathodenkammer der Zelle eingeführt wird, ein elektrischer Strom durch die Zelle geleitet wird, und wässerige Alkalihydroxidlösung aus der Kathodenkammer

entfernt wird und Chlor au der Anodenkammer entfernt wird, von einer elektrochemischen Zelle, wie in einem der Ansprüche 9 bis 16 beansprucht.

18. Verwendung nach Anspruch 17, bei der ein Gas, das elementaren Sauerstoff umfasst, in die Kathodenkammer eingeführt wird.

19. Verfahren zur Herstellung eines Membran/Elektroden-Verbunds, wie in einem der Ansprüche 1 bis 8 beansprucht, wobei das Verfahren folgende Stufen umfasst:

(a) Bereitstellen einer Kationenaustauschermembran (1) wie in Anspruch 1 definiert;

(b) Auftrag auf mindestens eine freie Oberfläche der Membran, von einer Dispersion eines Elektrokatalysators in einer flüssigen Zusammensetzung, die das Fluorpolymer-Bindemittel mit funktionellen Gruppen —$SO_3M$ und/oder —COOM, worin M Na oder K ist, oder einen Vorläufer davon, mit Gruppen —$SO_2F$ oder —COOR, worin R Alkyl mit 1 bis 4 Kohlenstoffatomen ist, enthält, wobei die funktionellen Gruppen des Vorläufers anschliessend zu Gruppen $SO_3M$ bzw. —COOM in einem flüssigen Medium hydrolysiert werden; und

(c) Entfernen des flüssigen Mediums.

20. Verfahren nach Anspruch 19, bei dem die flüssige Zusammensetzung ein Fluorpolymer-Bindemittel mit funktionellen Gruppen —$SO_3M$, worin M Na oder K ist, und einem Äquivalentgewicht bis zu 1000, in einem flüssigen Medium enthält, das eine Lösung in Wasser bildet, die mindestens 5 Gew.-% des flüssigen Mediums enthält.

21. Verfahren nach Anspruch 19, bei dem die flüssige Zusammensetzung ein Fluorpolymer-Bindemittel enthält, das Fluorpolymer-Bindemittel Gruppen —COOR, worin R Alkyl mit 1 bis 4 Kohlenstoffatomen ist oder Gruppen —$CO_2F$, hat, in einem flüssigen Medium, das eine perhalogenierte Flüssigkeit oder eine perhalogenierte Flüssigkeit, die eine Sulfonylfluorid- oder Carbonsäureestergruppe enthält, ist, und das Verfahren darüber hinaus folgende Stufe umfasst:

(d) Hydrolyse der funktionellen Gruppen des Fluorpolymer-Bindemittels zu Gruppen —COOM oder —$SO_3M$.